# FASCICULE DE BREVET EUROPEEN

(11) **EP 1 865 454 B1**
(45) Date de publication et mention de la délivrance du brevet: **13.03.2013**
(21) Numéro de dépôt: 07109032.8
(22) Date de dépôt: 28.05.2007
(51) Int. Cl.: G06Q 20/00, H04L 12/58

(54) **Procédé et système de gestion automatique et transparente de requetes utilisateurs sur un système de messagerie instantée via des contacts virtuels**
Verfahren und System zur automatischen und transparenten Verwaltung von Benutzeranfragen in einem Instant-Messaging-System mittels virtueller Kontakte
Method and system of automatic and transparent management of user requests in an instant messaging system via virtual contacts

(30) Priorité: 06.06.2006 FR 0652024
(43) Date de publication de la demande: 12.12.2007
(73) Titulaire: FRANCE TELECOM, 75015 Paris (FR)
(72) Inventeur: Buchot, Thierry, 35530, SERVON-SUR-VILAINE (FR); Bossard, Nicholas, 35000, RENNES (FR); Mazurier, Bernard, 35510, CESSON-SEVIGNE (FR)
(74) Mandataire: David, Alain

(56) Documents cités:
- EP-A2- 1 569 397
- WO-A-2005/003989
- US-A1- 2002 016 765
- US-A1- 2004 230 684
- US-A1- 2005 138 128

## Description

Procédé et système de gestion automatique et transparente de requêtes utilisateurs sur un système de messagerie instantanée via des contacts virtuels.

### Domaine l'invention

L'invention se situe dans le domaine des réseaux de messagerie instantanée qui fournissent des services web à leurs utilisateurs.

Plus précisément, l'invention concerne un procédé et système de gestion de requêtes d'un utilisateur, client d'un serveur de messagerie instantanée, via des contacts virtuels dont au moins un contact virtuel transparent, c'est-à-dire inconnu de cet utilisateur.

### Arrière-plan de l'invention

De manière générale, on désignera par « contact virtuel » tout dispositif apte à communiquer avec un client d'un service de messagerie instantanée. Un tel dispositif, communément appelé « Virtual Buddy » (VB) ou « Buddy Bot » est « virtuel » dans le sens où il est non humain mais capable de converser avec un humain (utilisateur) dans une fenêtre de discussion de messagerie instantanée. De plus, celui-ci peut être inclus dans une liste de contacts de l'utilisateur, d'où la dénomination de contact virtuel. D'un point de vue matériel, un « Virtual Buddy » peut être constitué par un serveur informatique ou un automate de communication tel qu'un serveur d'intelligence artificielle apte à converser en langage naturel avec un utilisateur humain.

De manière classique, un utilisateur d'un client de messagerie instantanée possède une liste de contacts dans laquelle figure des contacts (réels ou virtuels) représentatifs d'entités (humaines ou non humaines) avec lesquelles il est apte à communiquer. Un tel utilisateur est apte à engager une communication avec un contact (réel ou virtuel) à condition que ce dernier soit présent dans sa liste de contacts. Toutefois, dans le cas où il n'appartient pas à cette liste, l'utilisateur est contraint de l'ajouter à sa liste s'il souhaite dialoguer avec ce nouveau contact (réel ou virtuel).

Ainsi, un utilisateur est contraint de connaître l'identifiant de ce nouveau contact virtuel pour pouvoir l'insérer manuellement dans sa liste de contacts puis engager une conversation avec lui.

De plus, cette approche ne permet pas à un utilisateur en cours de communication avec un contact virtuel, dans une fenêtre de discussion courante préalablement établie, d'entrer en communication avec un autre contact virtuel dans la même fenêtre de discussion.

Le document EP 1569397 décrit un dispositif d'interconnexion permettant de transférer une session de communication de messagerie instantanée établie entre un terminal et un dispositif interactif à un agent. Le document WO 2005/003989 décrit un système d'interconnexion pour le transfert de sessions de communication. D'autres systèmes de transfert ou de redirection de sessions de communication sont en outre décrits dans les documents US 2005/138128, US 2004/230684 et US 2002/016765.

### Objet et résumé de l'invention

La présente invention permet de pallier aux inconvénients mentionnés ci-avant, en proposant un dispositif d'interconnexion tel que défini dans la revendication 1.

Le dispositif d'interconnexion assure une mise en relation entre l'utilisateur et le contact virtuel, par l'intermédiaire du serveur de messagerie instantanée. Le dispositif d'interconnexion, selon l'invention, comporte des moyens d'aiguillage permettant d'établir une communication entre le terminal de l'utilisateur et un deuxième automate de communication, à partir d'une communication en cours entre le terminal de l'utilisateur et le premier automate de communication, dans une session de messagerie instantanée préalablement établie entre l'utilisateur du terminal et le contact virtuel.

On notera que la communication pourra être redirigée, par exemple à l'initiative de l'utilisateur, ou par le premier automate de communication, consécutivement à une action effectuée par l'utilisateur.

Une communication initialement établie dans une session de messagerie instantanée entre l'utilisateur et le premier automate de communication est aiguillée ou redirigée par les moyens d'aiguillage du dispositif d'interconnexion selon l'invention vers le deuxième automate de communication, sans rupture de la communication courante.

Selon un autre mode particulier de réalisation, le dispositif d'interconnexion selon l'invention intègre le deuxième automate de communication.

Ce mode de réalisation a l'avantage de sécuriser les échanges avec le deuxième automate et de partager des données sensibles entre les moyens d'aiguillage et le deuxième automate, tout en permettant de proposer le dispositif d'interconnexion à plusieurs types de serveurs de messagerie instantanée.

Selon un autre mode particulier de réalisation, le dispositif d'interconnexion selon l'invention est intégré dans le serveur de messagerie instantanée.

Ce mode de réalisation a l'avantage de partager des données sensibles entre les moyens d'aiguillage et le serveur de messagerie instantanée. De plus, le deuxième automate peut rendre des services hors du domaine de l'opérateur du serveur de messagerie et des moyens d'aiguillage.

Selon un autre mode particulier de réalisation, le dispositif d'interconnexion selon l'invention intègre le deuxième automate de communication et est intégré dans le serveur de messagerie instantanée.

Ce mode de réalisation à l'avantage de sécuriser les échanges avec le deuxième automate et de partager des données sensibles entre les moyens d'aiguillage, le deuxième automate et le serveur de messagerie instantanée.

Selon une caractéristique de l'invention, les moyens d'aiguillage sont aptes à rediriger automatiquement la communication en cours, du premier automate de communication vers le deuxième automate de communication, sans que ce dernier ne soit identifié par l'utilisateur en tant que nouveau contact et tout en restant dans la même session de messagerie instantanée.

La redirection automatique de la communication courante vers le deuxième automate de communication est transparente pour l'utilisateur du client de messagerie instantanée dans le sens où l'utilisateur n'est pas contraint de connaître l'identité du deuxième automatique ni de l'inclure dans sa liste de contacts pour pouvoir entrer en communication avec lui.

Ceci est particulièrement avantageux dans le cas où l'utilisateur a besoin de converser avec ce deuxième automate alors qu'il ne connaît pas ou qu'il n'est pas censé connaître son identité voire son existence.

Selon une caractéristique de l'invention, les moyens d'aiguillage redirigent la communication en cours qui se poursuit dans une même fenêtre de discussion de messagerie instantanée préalablement utilisée pour communiquer avec le premier automate de communication.

De manière avantageuse, la redirection de la communication courante se fait de manière transparente pour l'utilisateur qui n'est pas contraint de sortir de la fenêtre de discussion courante pour pouvoir communiquer avec ce deuxième automate. Ceci est particulièrement avantageux lorsque l'utilisateur est amené à converser simultanément avec plusieurs automates.

Selon une autre caractéristique de l'invention, les moyens d'aiguillage du dispositif d'interconnexion selon l'invention sont aptes à rediriger, en cascade, la communication en cours, vers une pluralité de deuxièmes automates de communication.

Ainsi, la communication en cours peut être redirigée de manière séquentielle, du premier automate vers un premier deuxième automate, puis de ce premier deuxième automate vers un second deuxième automate et ainsi de suite, permettant ainsi de faire collaborer plusieurs automates dans une même session de messagerie instantanée et voire dans une même fenêtre de discussion, préalablement établie entre l'utilisateur et le contact virtuel.

Selon une autre caractéristique de l'invention, les moyens d'aiguillage sont aptes à rétablir une communication entre le terminal de l'utilisateur et le premier automate de communication, dans la session de messagerie instantanée préalablement établie entre utilisateur du terminal et le contact virtuel, en réponse à un message émis par le deuxième automate de communication avec lequel le terminal est en cours de communication, en fournissant éventuellement un compte-rendu d'exécution du traitement.

La communication est redirigée de manière automatique vers le premier automate, de sorte que l'utilisateur puisse poursuive sa discussion avec ce dernier. De manière avantageuse, la communication est redirigée de manière temporaire, sans intervention manuelle de l'utilisateur.

Selon une autre caractéristique de l'invention, le dispositif d'interconnexion selon l'invention comporte en outre des moyens d'obtention d'informations relatives à l'utilisateur, par exemple liées à son authentification.

Ainsi, dans le cas où le deuxième automate de communication requiert de telles informations pour fournir un service à l'utilisateur, celles-ci peuvent être automatiquement obtenues par le dispositif d'interconnexion selon l'invention puis transmises au deuxième automate, sans que l'utilisateur soit contraint de saisir ou ressaisir ces informations.

Selon une autre caractéristique de l'invention, le dispositif d'interconnexion selon l'invention comporte en outre des moyens de sauvegarde des échanges d'informations effectués avec les premier et deuxième automates de communication.

Ainsi, un opérateur du dispositif d'interconnexion selon l'invention peut retracer les échanges ou transactions effectués entre l'utilisateur et les automates de communication à des fins de contrôle des demandes effectuées par des automates extérieurs au domaine de l'opérateur, d'un fournisseur d'accès à Internet ou d'un opérateur mobile et à des fins d'assistance aux utilisateurs, en cas de contestation ultérieure au sujet de certaines transactions.

L'invention vise également un procédé d'aiguillage tel que défini dans la revendication 8.

Le procédé selon l'invention comporte une étape d'aiguillage de la communication en cours vers un deuxième automate de communication, de manière à établir une communication entre ce dernier et le deuxième automate de communication dans la même session de messagerie instantanée.

Les avantages de ce procédé d'aiguillage sont les mêmes que ceux associés au dispositif d'interconnexion selon l'invention décrit ci-avant.

Selon une caractéristique de l'invention, la communication en cours est redirigée automatiquement du premier automate de communication vers le deuxième automate de communication, sans que ce dernier ne soit identifié par l'utilisateur du terminal en tant que nouveau contact, tout en restant dans la même session de messagerie instantanée.

Selon une autre caractéristique de l'invention, la communication courante est redirigée dans une même fenêtre de discussion de messagerie instantanée préalablement utilisée pour communiquer avec le premier automate de communication.

Selon une autre caractéristique de l'invention, une communication entre le terminal de l'utilisateur et le premier automate de communication est rétablie, dans la session de messagerie instantanée préalablement établie entre l'utilisateur et le contact virtuel, en réponse à un message émis par le deuxième automate de communication.

L'invention vise également un système de communication comprenant un terminal d'un utilisateur sur lequel est installé un client de messagerie instantanée, un premier automate de communication, un deuxième automate de communication, un serveur de messagerie instantanée et un dispositif d'interconnexion selon l'invention.

Dans un mode particulier de réalisation du système de communication selon l'invention, le premier automate de communication destiné à fournir des services web payants à l'utilisateur et le deuxième automate de communication est destiné à gérer le paiement d'une transaction pour un achat en ligne.

Ainsi, lors d'une communication préalablement établie entre l'utilisateur et le premier automate dans une fenêtre de discussion de messagerie instantanée, le deuxième automate entre en communication, via cette même fenêtre, de manière transparente avec l'utilisateur, afin de collecter des informations nécessaires et notamment l'accord formel de l'utilisateur concernant l'achat d'un service en ligne.

En effet, on peut considérer que le premier automate est susceptible d'appartenir à un fournisseur de services extérieur au fournisseur d'accès (ou à l'opérateur mobile) et par conséquent hors de son contrôle, alors que le deuxième automate, susceptible d'effectuer des opérations en relation proche avec un système d'information ou de facturation de l'utilisateur est entièrement sous contrôle du fournisseur d'accès (ou de l'opérateur mobile).

La communication établie entre l'utilisateur et le deuxième automate évite ainsi que des informations sensibles (relatives au paiement en question) ne transitent par le premier automate, permettant de sécuriser la transaction.

Ceci permet à un utilisateur d'acheter des services web dans le cadre de son client de messagerie instantanée, sans faire appel à un autre protocole que celui géré par son client.

On notera que la mise en oeuvre d'un tel procédé n'engendre pas, voire très peu, de modifications du client de messagerie instantanée.

Le système selon l'invention constitue une solution simple et facile à mettre en oeuvre pour des fournisseurs de services web payants par le biais de la messagerie instantanée, en simplifiant et en sécurisant la procédure de paiement en ligne.

En variante, les différentes étapes du procédé de routage de paquets de données décrit ci-dessus sont déterminées par des instructions de programmes d'ordinateurs.

En conséquence, l'invention vise également un programme d'ordinateur comportant des instructions de code de programme pour l'exécution des étapes du procédé d'aiguillage d'une communication dans une session de messagerie instantanée tel que décrit ci-dessus, lorsque ce programme est exécuté par un dispositif d'interconnexion selon l'invention.

Ce programme peut utiliser n'importe quel langage de programmation et être sous la forme de code source, de code objet, ou de code intermédiaire entre code source et code objet, tel que dans une forme partiellement compilée, ou dans n'importe quelle autre forme souhaitable. Il peut être stocké sur tout type de support d'informations lisible par un équipement informatique et capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

### Brève description des dessins

D'autres caractéristiques et avantages de la présente invention ressortiront mieux de la description faite ci-dessous, en référence aux dessins annexés qui en illustrent des exemples de réalisation dépourvus de tout caractère limitatif et sur lesquels :
- la figure 1 illustre de manière schématique, un dispositif d'interconnexion dans son environnement, conforme à l'invention selon un mode particulier de réalisation;
- la figure 2 illustre de manière schématique, un dispositif d'interconnexion selon l'invention, dans son environnement et selon un autre mode particulier de réalisation ;
- la figure 3 illustre de manière schématique, un dispositif d'interconnexion selon l'invention, dans son environnement et selon encore un mode particulier de réalisation ;
- la figure 4 illustre de manière schématique, un dispositif d'interconnexion selon l'invention, dans son environnement et selon encore un autre mode particulier de réalisation ;
- la figure 5 illustre de manière schématique, un dispositif d'interconnexion conforme à l'invention, dans un système de messagerie instantanée fournissant des services web payants en ligne, selon un mode particulier de réalisation ;
- la figure 6 illustre de manière schématique, un dispositif d'interconnexion conforme à l'invention, dans un système de messagerie instantanée fournissant des services web payants en ligne, selon un autre mode particulier de réalisation;
- la figure 7 illustre les étapes du procédé selon un mode de réalisation de l'invention, dans le cadre de l'application de la figure 5 ; et
- la figure 8 illustre schématiquement un système informatique mettant en oeuvre le dispositif d'interconnexion conforme à l'invention.

### Description détaillée de plusieurs modes de réalisation

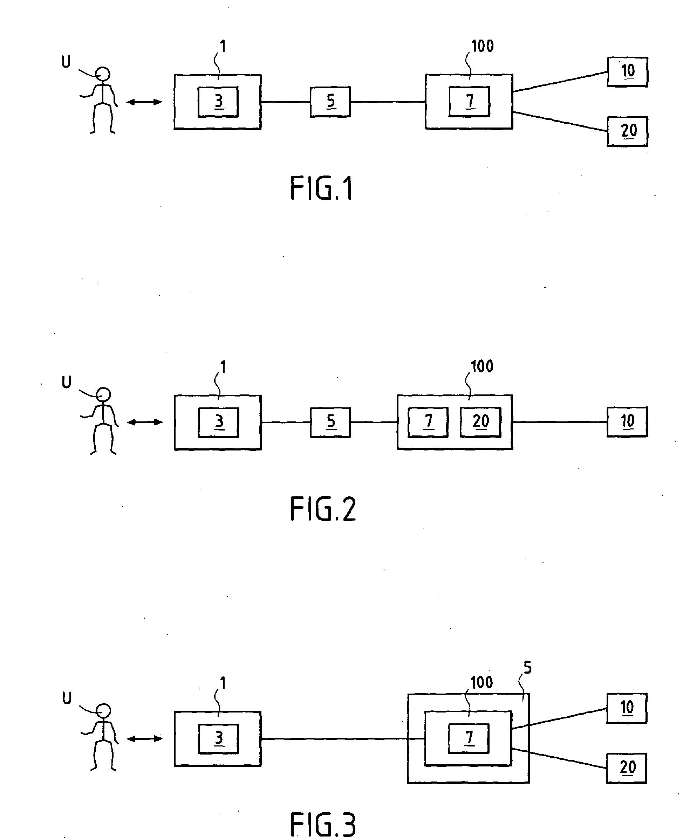

La figure 1 illustre de manière schématique et selon un mode particulier de l'invention, un dispositif d'interconnexion 100 conforme à l'invention, placé en coupure de flux entre un serveur de messagerie instantanée 5 et un premier 10 et un deuxième 20 automates de communication, ce premier automate 10 constituant un contact virtuel d'un utilisateur U d'un terminal 1 comprenant un client 3 de messagerie instantanée.

De manière connue, le dispositif d'interconnexion 100 assure une mise en relation entre le serveur de messagerie instantanée 5 et le premier automate de communication 10. Pour cela, on suppose que l'utilisateur du client 3 de messagerie instantanée a préalablement inséré le contact virtuel dans une liste de contacts de son client 3.

Le dispositif d'interconnexion 100 comporte des moyens d'aiguillage (module d'aiguillage 7) permettant d'établir une communication entre cet utilisateur et un deuxième automate de communication 20 dans une session de messagerie instantanée préalablement établie entre l'utilisateur U et le contact virtuel.

Dans cet exemple, le module d'aiguillage 7 du dispositif d'interconnexion 100 est constitué, par exemple, par un programme informatique apte à gérer les échanges de messages avec le serveur de messagerie instantanée 5 et les automates de communication 10, 20 et qui gère une phase de redirection d'une communication, en intégrant un automate d'état qui évolue au gré de ces échanges.

Le terminal 1 de l'utilisateur U est par exemple un ordinateur sur lequel est installé le client 3 de messagerie instantanée qui se connecte, de manière connue, au serveur de messagerie instantanée 5.

Toutefois, on notera que dans d'autres modes de réalisation de l'invention, le terminal 1 pourra être constitué par un téléphone portable, un PDA (Personal Digital Assistant) ou tout autre type de terminal apte à communiquer avec le serveur de messagerie instantanée 5.

Ce serveur de messagerie instantanée 5 est à titre d'exemple, constitué par un serveur « Jabber » utilisant le protocole XMPP (« eXtended Messaging and Presence Protocol ») pour communiquer avec le client de messagerie instantanée 3 et le module d'aiguillage 7 du dispositif d'interconnexion 100. Il pourrait également s'agir d'un serveur de messagerie instantanée basé sur le protocole SIP/SIMPLE.

Les premier 10 et deuxième 20 automates de communication sont constitués par des serveurs s'interfaçant avec le dispositif d'interconnexion 100.

Selon un autre mode particulier de réalisation de l'invention, le dispositif d'interconnexion 100 intègre le deuxième automate 20 de communication, comme représenté à la figure 2.

Selon encore un mode particulier de réalisation de l'invention, le dispositif d'interconnexion 100 fait partie intégrante du serveur de messagerie instantanée 5, comme représenté à la figure 3.

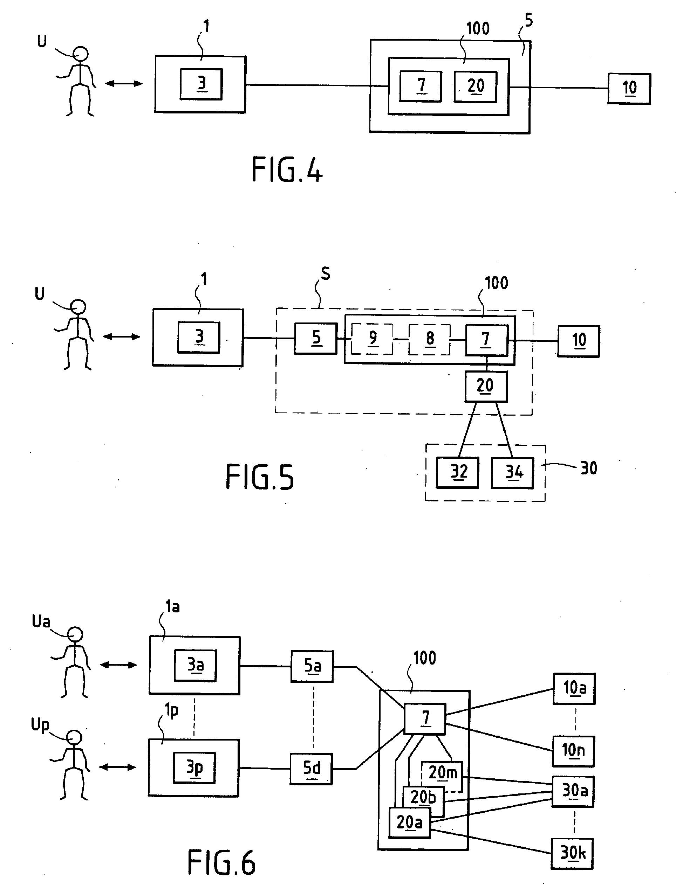

Selon encore un autre mode particulier de réalisation de l'invention, le dispositif d'interconnexion 100 intègre le deuxième automate 20 et l'ensemble ainsi formé est intégré dans le serveur de messagerie instantanée 5, comme représenté à la figure 4.

L'invention trouve une utilisation privilégiée mais non limitative dans la fourniture de services web payants en ligne par messagerie instantanée. Ainsi, l'invention va maintenant être décrite de manière plus détaillée dans le cadre d'un système de messagerie instantanée fournissant à ses utilisateurs des services web payants en ligne.

Dans la suite de la description, il sera fait référence à la terminologie suivante :

Le terme « Virtual Buddy Service » (VB Service) désignera par la suite tout «Virtual Buddy » (défini précédemment dans l'arrière plan de l'invention) destiné à fournir des services web à un utilisateur d'un client de messagerie instantanée.

Dans cet exemple particulier d'utilisation, on distingue principalement deux types de contacts virtuels : un « Virtual Buddy Marchand » et un « Virtual Buddy de Paiement ».

Le terme « Virtual Buddy Marchand » (VB Marchand) désignera par la suite un « Virtual Buddy Service » adapté à proposer des services payants à un utilisateur d'un client de messagerie instantanée.

Le terme « Virtual Buddy de Paiement » (VB de Paiement) désignera par la suite un « Virtual Buddy Service » adapté à gérer une phase de paiement entre un utilisateur et une plate-forme de paiement.

L'invention va maintenant être décrite en détail, en référence à la figure 5. Néanmoins, la description qui suit s'applique également à chacun des modes de réalisation décrits ci-dessus.

La figure 5 illustre, de manière schématique, un système de messagerie instantanée fournissant des services web payants. Ce système comporte le dispositif d'interconnexion 100 selon l'invention placé en coupure de flux entre le terminal 1 de l'utilisateur sur lequel est installé le client de messagerie instantanée 3 et les premier 10 et deuxième 20 automates de communication. Dans cet exemple, ces automates de communication 10, 20 sont des « Vïrtual Buddies » avec lesquels l'utilisateur U du client de messagerie 3 est apte à communiquer.

Le premier automate 10 est un « Virtual Buddy Marchand » constitué en partie par un serveur d'intelligence artificielle, apte à converser en langage naturel avec l'utilisateur U du client 3, dans une session de messagerie instantanée. Ce « Virtual Buddy Marchand » 10 représente pour l'utilisateur U un contact virtuel qu'il a préalablement inséré dans sa liste de contacts.

Pour des raisons de simplicité, l'utilisateur U a accès, dans cet exemple, à un seul premier automate 10 « VB Marchand » par l'intermédiaire du dispositif d'interconnexion 100 selon l'invention.

Néanmoins, la présente invention s'applique indifféremment au cas où l'utilisateur a accès à une pluralité de premiers automates « VB Marchands ».

Le deuxième automate 20 est un « Virtual Buddy de Paiement » constitué en partie par un serveur de paiement. On notera que contrairement au « Virtual Buddy Marchand» 10, le « VB de Paiement » 20 n'est pas destiné à être ajouté à une liste de contacts de messagerie instantanée de l'utilisateur. Il est prévu que le « VB de Paiement » 20 soit temporairement accessible par l'utilisateur via le dispositif d'interconnexion 100 selon l'invention, par redirection d'une communication en cours avec le « VB Marchand » 10.

Pour des raisons de simplicité, un seul deuxième automate 20 « VB de Paiement » a été représenté. Néanmoins, on notera que la présente invention s'applique indifféremment au cas où on dispose d'une pluralité de deuxièmes automates « VB de Paiement » afin de fournir à la pluralité de premiers automates « VB Marchands » différentes solutions de paiement, pouvant être adaptées aux besoins de chaque « VB Marchand ». Dans ce cas, le module d'aiguillage 7 intègre une configuration qui permet de définir quels « VB de Paiement » sont associés à quels « VB marchands ».

On désignera par S un système d'interconnexion comprenant le dispositif d'interconnexion 100 selon l'invention, le serveur de messagerie instantanée 5, système d'interconnexion S assurant la communication entre l'utitisateur U et les « Virtual Buddies » 10, 20.

Classiquement, la présence et la liste des « Virtual Buddies » disponibles sont gérées par le serveur de messagerie instantanée 5 ou bien par le dispositif d'interconnexion 100.

Dans cet exemple, le système d'interconnexion S est constitué, de manière avantageuse, par un serveur d'un fournisseur d'accès à Internet.

On notera que dans un autre de mode de réalisation de l'invention, le dispositif d'interconnexion 100 pourra être intégré dans le serveur de messagerie instantanée 5, tout en restant dans le cadre de l'invention.

Le module d'aiguillage 7 communique avec le « VB Marchand » 10 et le « VB de Paiement » 20 selon le protocole SOAP (« Simple Object Access Protocol ») et/ou selon le protocole XHTML (« extensible HyperText Markup Language »).

Ainsi, le module d'aiguillage 7 réalise une conversion/adaptation de protocole (XMPP/SOAP ou XMPP/XHTML) permettant de faire communiquer le client 3 de messagerie instantanée avec les « Virtual Buddies » 10, 20.

Le dispositif d'interconnexion 100 comporte en outre des moyens d'obtention 8 d'informations relatives à l'utilisateur, par exemple des informations d'authentification obtenues au niveau du logiciel client de messagerie 3 par une requête appropriée transitant via le serveur de messagerie instantanée 5. Dans le cas où les informations d'authentification sont chiffrées, les moyens d'obtention 8 sont adaptés à déchiffrer ces informations.

Le dispositif d'interconnexion 100 comporte en outre des moyens de sauvegarde 9 destinés à sauvegarder de manière permanente tous les échanges d'informations effectués avec le « VB de Paiement » 20 et le « VB Marchand » 10.

Ainsi, le traçage des dialogues est amélioré, ce qui est particulièrement avantageux en cas de contestation du paiement d'un service réellement rendu par un « Virtual Buddy ».

Le système de messagerie instantanée comprend en outre un système de paiement 30 en ligne apte à communiquer avec le « VB de Paiement » 20. Les échanges entre le système de paiement 30 et le « VB de Paiement » 20 s'effectuent selon un protocole sécurisé.

Ce système de paiement en ligne 30 comprend :
- un module d'identification 32 lié à un système d'information d'un fournisseur d'accès à Internet, d'un opérateur de téléphonie mobile, ou d'un fournisseur du service de messagerie instantanée pour identifier les utilisateurs en tant qu'abonnés facturables ;
- une plateforme de micro-paiement ou autre système de facturation en ligne 34.

La figure 6 illustre, de manière schématique, un système de messagerie instantanée fournissant des services web payants selon un autre mode de réalisation.

Dans le système illustré, le dispositif d'interconnexion 100 selon l'invention comprend le module d'aiguillage 7 et une pluralité de deuxièmes automates « VB de Paiement » 20a - 20m. On notera que, cette pluralité de « VB de Paiement » 20a - 20m est connectée à un ou plusieurs systèmes de paiement 30a - 30k. Toutefois, pour des raisons de simplicité, on ne décrira, par la suite, les échanges réalisés qu'avec un seul « VB de Paiement » 20a.

Dans ce mode de réalisation, le dispositif d'interconnexion 100 s'interface d'une part avec une pluralité de « VB Marchands » 10a - 10n et d'autre part avec une pluralité de serveurs de messagerie instantanée 5a - 5d qui sont eux-mêmes connectés à une pluralité de terminaux 1a - 1p d'utilisateurs Ua - Up équipés respectivement d'un client de messagerie instantanée 3a - 3p.

Les serveurs de messagerie instantanée 5a - 5d peuvent s'interfacer selon des protocoles distincts. Ainsi un serveur de messagerie instantanée 5a peut communiquer selon le protocole de communication XMPP précité, tandis qu'un autre serveur de messagerie instantanée 5d peut communiquer selon le protocole SIP (« Session Initiation Protocol »).

Le « VB de Paiement » 20a s'interface avec une pluralité de systèmes de paiement en ligne 30a - 30k, qui peuvent implémenter des méthodes de paiement distinctes. Bien entendu, comme précédemment, les systèmes de paiement peuvent aussi s`interfacer avec une pluralité de « VB de paiement ».

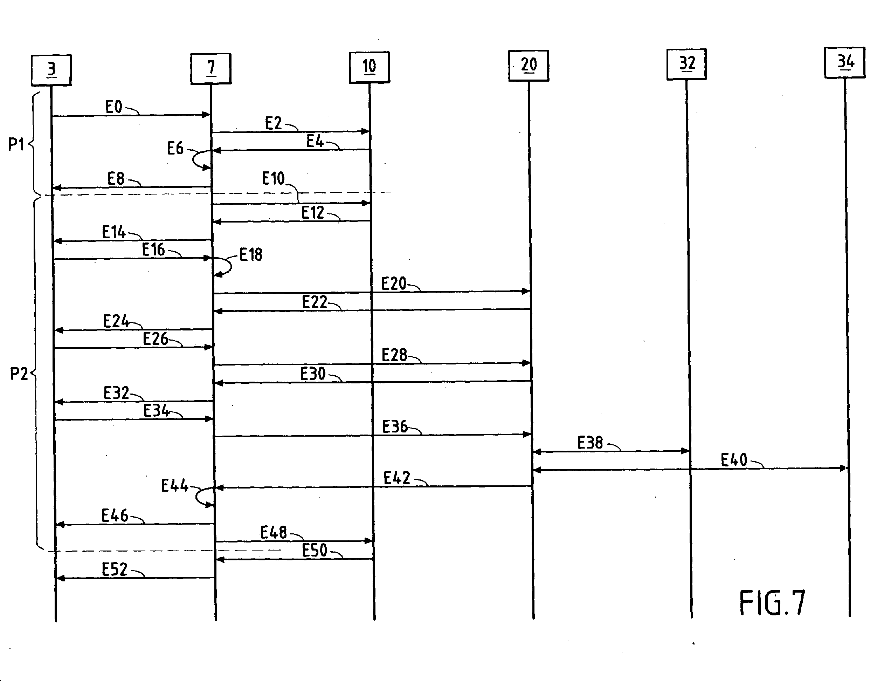

Les étapes du procédé selon l'invention vont maintenant être décrites en référence aux figures 5 et 7.

Comme illustré à la figure 7, lors d'une première phase P1 de dialogue non payante, l'utilisateur du client de messagerie instantanée 3 converse/dialogue avec le « VB Marchand » 10, par l'intermédiaire du module d'aiguillage 7.

On notera que tous les échanges d'informations entre le client 3 et le module d'aiguillage 7 transitent via le serveur de messagerie instantanée 5, qui n'a toutefois pas été représenté sur la figure 7 pour raison de simplicité, étant donné que le serveur de messagerie instantanée 5 n'effectue qu'un simple travail de routage et de manière connue.

Comme précédemment, on suppose que l'utilisateur U a préalablement inséré le « VB Marchand » 10 en tant que contact virtuel, dans sa liste de contacts et que l'utilisateur a préalablement établi une session de messagerie instantanée avec le « VB Marchand» 10, dans une fenêtre de discussion courante.

Au cours de cette discussion, on suppose que l'utilisateur pose une question en langage naturel destinée au « VB Marchand » 10, du type : « Quels modèles de produits sont disponibles à la vente et à quel prix? ». Cette question est d'abord envoyée par le client 3 au module d'aiguillage 7 selon le protocole XMPP. Le module d'aiguillage 7 transforme la question en une requête interprétable par le « VB Marchand » 10, puis l'envoie à ce dernier selon le protocole SOAP. Le « VB Marchand » 10 interprète cette requête et fournit en réponse au client 3 les informations requises.

Lors d'une étape initiale E0, l'utilisateur désirant passer une commande, envoie par l'intermédiaire de son client 3, un message de type texte au module d'aiguillage 7 selon le protocole XMPP, ce message contenant par exemple, la référence de l'article que l'utilisateur souhaite acheter.

A partir de ces informations, le module d'aiguillage 7 émet une requête SOAP au « VB Marchand » 10 lors d'une étape E2. Cette requête implémente une méthode dite « Ask » qui prend en compte le texte soumis par le client 3 lors de l'étape initiale E0 ainsi que son identifiant de messagerie instantanée.

Lors d'une étape suivante E4, le module d'interface 7 reçoit de la part du « VB Marchand » 10, un message SOAP de réponse à la requête précédente, pour l'informer que la commande passée par le client 3 a bien été prise en compte et que la communication va être redirigée vers le « VB de Paiement » 20.

Pour cela, un paramètre dit « Redirect » est contenu dans le message SOAP de réponse et est exécutée lors d'une étape E6 par le module d'aiguillage 7 qui se charge d'initier une opération de redirection de la communication en cours et d'initialiser l'enregistrement des échanges d'informations concernant le paiement. Ainsi, l'étape E6 marque le début de la phase de paiement.

Conformément à l'invention, l'opération de redirection a pour conséquence de ré-aiguiller tous les échanges de l'utilisateur avec le « VB Marchand » 10 vers le « VB de Paiement » 20, de sorte que tous les messages émis désormais par le client 3 sont aiguillés vers le « VB de Paiement » 20.

Alternativement, en référence au mode de réalisation décrit à la figure 6, la redirection de la communication en cours pourra s'effectuer en cascade, c'est-à-dire qu'elle pourra être aiguillée séquentiellement d'un premier deuxième automate « VB de Paiement » 20a vers un second deuxième automate « VB de Paiement » 20b, et ainsi de suite, éventuellement jusqu'à un dernier deuxième automate « VB de Paiement » 20m de la pluralité de deuxièmes automates 20a-20m.

On notera que bien que cette redirection soit la conséquence d'une action de l'utilisateur U marquée par sa volonté d'acheter un produit en ligne, celle-ci est transparente pour l'utilisateur, qui n'est pas contraint à insérer l'identifiant d'un « VB de Paiement » dans sa liste de contacts et à ouvrir une autre session de discussion.

En effet, l'utilisateur n'est pas censé connaître l'identité du « VB de Paiement » 20, contrairement au « VB Marchand » 10 auprès duquel il s'est préalablement inscrit pour établir la communication initiale.

Ainsi, la communication courante est redirigée vers le « VB de Paiement » 20 dans la même fenêtre de discussion que celle préalablement utilisée pour communiquer avec le « VB Marchand » 10. De manière avantageuse, cette redirection simplifie la procédure de paiement du point de vue de l'utilisateur, lui permettant d'effectuer des achats impulsifs. Celle-ci lui évite, par exemple, d'être redirigé vers une fenêtre d'un navigateur web pour la phase de paiement et de faire appel à un autre protocole tel que HTTP. Elle simplifie également la procédure de paiement du point de vue du « VB Marchand » 10 en lui permettant d'externaliser toute la procédure de paiement.

Dans cet exemple particulier de réalisation, on utilise la fenêtre de discussion courante pour rediriger la communication vers le « VB Marchand » 10. Toutefois, on pourrait envisager le cas où la communication est redirigée en utilisant une nouvelle fenêtre de discussion, sans pour autant s'écarter du principe de l'invention.

Lors d'une étape E8, le module d'aiguillage 7 émet un message d'information au client 3 selon le protocole XMMP, pour l'informer qu'il entre dans une phase de paiement référencée P2. Ce message provoque l'affichage d'un indicateur spécifique sur le client 3, de manière à avertir son utilisateur qu'il est en phase payante. Il peut également afficher dans la fenêtre de discussion courante du client 3 un message textuel l'avertissant de la redirection vers un VB de service, en l'occurrence un module de paiement pour gérer la transaction.

Le module d'aiguillage 7 récupère ensuite des informations de la transaction auprès du « VB Marchand » 10. Pour cela, le module d'aiguillage 7 émet, lors d'une étape E10, une requête SOAP de demande d'informations au « VB Marchand » 10 en fournissant à ce dernier l'identifiant du client 3. En réponse à cette requête, le « VB Marchand » 10 envoie (étape E12) au module d'interface 7, un message comprenant des paramètres relatifs au produit acheté incluant le type de produit et le prix correspondant.

Le module d'aiguillage 7 récupère ensuite des informations d'authentification de l'utilisateur qui sont stockées localement au niveau du logiciel client de messagerie instantanée de l'utilisateur, ce dernier s'étant préalablement authentifié au lancement du logiciel. Pour cela, le module d'aiguillage 7 émet, lors d'une étape de demande d'authentification E14, une requête au client 3 lui demandant de fournir un identifiant unique de service dénommé IUS.

Cet identifiant IUS est stocké au niveau d'une base de données d'un fournisseur d'accès à Internet auprès duquel l'utilisateur du client 3 est abonné. Cet identifiant IUS constitue une clé qui est utilisée par le module d'identification 32 pour identifier de façon unique un utilisateur d'un service donné. En réponse à cette requête, le client 3 fournit au module d'aiguillage 7 son identifiant IUS.

Dans le cas où l'identifiant IUS de l'utilisateur est crypté, le module d'interface 7 procède à une étape de décryptage optionnelle E18, au cours de laquelle il déchiffre l'identifiant IUS.

De manière avantageuse, la récupération automatique des informations d'authentification de l'utilisateur au niveau du logiciel du client, par le module d'aiguillage 7, évite notamment à l'utilisateur de saisir manuellement ces informations, une telle saisie pouvant être fastidieuse pour l'utilisateur et susceptible de brider la dynamique d'achat impulsif.

De plus, les échanges d'informations spécifiquement liés à une transaction, y compris les éventuelles données saisies par l'utilisateur, ne transitent pas par le « VB Marchand » 10. De manière avantageuse, ceci permet d'assurer à l'utilisateur un plus haut degré de sécurisation de la transaction étant donné que l'accès direct du « VB Marchand » 10 au « VB de Paiement » 20 est rendu impossible et que les informations personnelles ou permettant une facturation par une autre voie ne transitent pas par le « VB Marchand » 10. Ceci est d'autant plus avantageux que le « VB Marchand » 10 n'est pas sous le contrôle du fournisseur d'accès à Internet auprès duquel l'utilisateur du client 3 est abonné. Le module d'interface 7 soumet au « VB de Paiement » 20 l'ensemble des paramètres caractérisant l'achat devant être effectué et son acheteur (utilisateur du client 3). Pour cela, le module d'interface 7 émet, lors d'une étape de soumission d'autorisation E20, une requête d'autorisation contenant des informations telles que: identifiant de session de messagerie instantanée, identifiant IUS de l'utilisateur obtenu lors de l'étape précédente E14, paramètres relatifs au produit devant être acheté. Cette requête d'autorisation marque l'entrée dans une phase payante du point de vue du « VB de Paiement » 20.

En réponse à cette requête, le « VB de Paiement » 20 envoie, lors d'une étape de confirmation E22, un message d'achat comprenant une proposition d'achat du produit, le descriptif du produit, son prix et une invitation à payer en précisant notamment les modalités de paiement (panel d'achat). Ce message d'achat est ensuite transmis au client 3 par le module d'interface 7 lors d'une étape E24.

L'utilisateur accepte l'achat et par conséquent son client 3 envoie un message de confirmation au module d'interface 7, lors d'une étape de confirmation E26. Ce message est ensuite transmis, lors d'une étape E28 par une requête « AskBilling », au « VB de Paiement » 20 qui l'analyse.

Si après analyse, le « VB de Paiement » 20 estime que la réponse de l'utilisateur est imprécise, il lui envoie à nouveau le panel d'achat, en indiquant éventuellement la valeur des champs erronés. Pour cela, le « VB de Paiement » 20 envoie une requête « AskBillingResponse » (étape 30) au module d'interface 7 qui se charge de le transmettre (étape 32) au client 3 de l'utilisateur. L'utilisateur soumet (étape 34) la réponse à cette requête au module d'interface 7 qui se charge de la transmettre (étape 36) au « VB de Paiement » 20 par l'envoi d'un message « AskBilling ». On notera, que l'enchaînement des étapes E30, E32, E34, E36 peut être réitéré plusieurs fois dans une limite configurable, tant que les informations fournies par l'utilisateur du client 3 sont erronées ou imprécises.

Si lors de l'étape E36, l'utilisateur donne son accord pour acheter le produit (message «AskBilling» contenant une réponse positive), le « VB de Paiement » 20 procède à l'achat de produit, de manière connue, par des échanges avec le système d'information du fournisseur d'accès à Internet, de l'opérateur de téléphonie mobile, ou du fournisseur du service de messagerie instantanée et le système de facturation 34.

En particulier, le « VB de Paiement » 20 détermine des informations concernant l'identifiant de facturation de l'utilisateur. Pour cela, lors d'une étape E38, il récupère, auprès du module d'identification 32 les informations nécessaires à la facturation.

La récupération de ces informations s'effectue à partir de l'identifiant unique de service IUS de l'utilisateur, obtenu préalablement par le « VB de Paiement » 20, lors de l'étape E20.

Dans le cas, où ces informations permettent de facturer l'utilisateur, une étape transaction E40 est effectuée entre le « VB de Paiement » 20 et le système de facturation 34. Pour cela, une requête d'achat est envoyée par le « VB de Paiement » 20 au système de facturation 34.

Lors d'une étape E42, le résultat de la transaction est transmis au module d'interface 7 qui met fin à la phase de paiement (étape E44) et, d'une part, retransmet (étape E46) un message XMPP marquant la fin du traitement par le « VB de Paiement » 20 au client 3, qui effectue alors un traitement de fin des actions spécifiques initiées à l'étape E8 (marqueur, texte) et d'autre part, transmet au « VB Marchand » 10 (étape E48) un message « EndRedirect » pour marquer la fin de cette phase de paiement.

En réponse, le « VB Marchand » 10 transmet, lors d'une étape E50, un message « EndRedirectResponse » indiquant qu'il reprend la main avec un texte à destination de l'utilisateur du type « Merci pour votre achat, cliquez ici pour accéder au bien », ce texte étant transmis à l'utilisateur lors d'une étape finale E52.

De manière avantageuse, le « VB de Paiement » n'est sollicité que temporairement, suite à la redirection de la communication courante, lors de la phase de paiement P2.

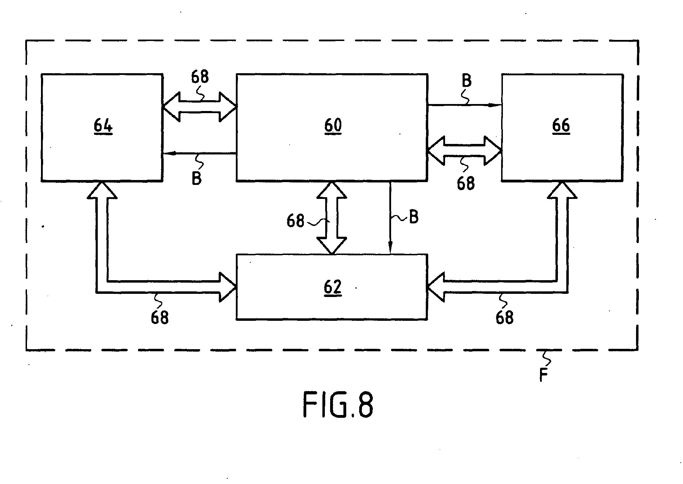

Le dispositif d'interconnexion 100 selon l'invention peut être mis en oeuvre par un système informatique F, tel que représenté sur la figure 8, comportant de manière classique une unité centrale de traitement 60 commandant par des signaux B une mémoire 62, une unité d'entrée 64 et une unité de sortie 66. Tous ces éléments sont raccordés entre eux par des bus de données 68.

Bien que l'invention ait été décrite de manière détaillée dans le cadre d'une application de services web payants en ligne, elle s'applique bien évidemment à tout type d'automate apte à fournir des services à un utilisateur d'un client de messagerie instantanée.

En particulier, l'invention s'applique également à un système de réservation (réservation de salles, de places de spectacle), dans lequel le premier automate 10 fournit à l'utilisateur des informations concernant des informations de disponibilité, tandis que le deuxième automate 20 gère la disponibilité de participants, par exemple, à l'aide d'un service de calendriers partagés en ligne.

## Revendications

1. Dispositif d'interconnexion (100) placé en coupure de flux entre un serveur de messagerie instantanée (5 ; 5a - 5d) et un premier automate de communication (10 ; 10a - 10n) constituant un premier contact virtuel d'un utilisateur (U ; Ua - Up) d'un terminal (1 ; 1a - 1p) comprenant un client (3 ; 3a - 3p) de messagerie instantanée, ledit dispositif d'interconnexion (100) assurant une mise en communication entre l'utilisateur (U ; Ua - Up) et ledit premier contact virtuel, par l'intermédiaire du serveur de messagerie instantanée (5 ; 5a - 5d),
ledit dispositif d'interconnexion (100) comportant un module d'aiguillage (7) pour, au cours d'une session de messagerie instantanée établie entre ledit utilisateur et le premier contact virtuel, transmettre au premier contact virtuel les messages reçus en provenance dudit utilisateur,
ledit module d'aiguillage étant agencé pour, au cours de ladite session, rediriger la communication en cours vers un deuxième automate de communication (20 ; 20a - 20m) constituant un deuxième contact virtuel, lesdits messages reçus en provenance dudit utilisateur étant transmis vers le deuxième automate de communication au lieu d'être transmis au premier automate de communication,
ledit module d'aiguillage étant agencé pour rediriger ladite communication suite à une réception par le module d'aiguillage d'un message avec un paramètre de redirection émis par le premier automate de communication,
ledit module d'aiguillage étant en outre agencé pour émettre une requête auprès du client (3 ; 3a - 3p) de messagerie instantanée de manière à récupérer des informations d'authentification de l'utilisateur stocké localement au niveau du client de messagerie instantanée de l'utilisateur et pour transmettre lesdites informations au deuxième automate de communication.

2. Dispositif selon la revendication 1, dans lequel le deuxième automate de communication est un automate de communication associé au premier automate, le module d'aiguillage étant configuré pour contenir une définition d'associations entre les deuxièmes automates et premiers automates.

3. Dispositif d'interconnexion (100) selon la revendication 1 ou 2, **caractérisé en ce que** ledit module d'aiguillage (7) est apte à rediriger automatiquement la communication en cours, du premier automate de communication (10 ; 10a - 10n) vers le deuxième automate de communication (20 ; 20a - 20m), sans que ce dernier (20 ; 20a - 20m) ne soit identifié par l'utilisateur (U ; Ua - Up) du terminal (1 ; 1a - 1p) en tant que nouveau contact et tout en restant dans la même session de messagerie instantanée.

4. Dispositif d'interconnexion (100) selon la revendication 3, **caractérisé en ce que**, après redirection, la communication en cours se poursuit entre l'utilisateur et le deuxième automate de communication au moyen d'une fenêtre de discussion de messagerie instantanée préalablement utilisée par ledit utilisateur pour communiquer avec le premier automate (10 ; 10a - 10n) de communication.

5. Dispositif d'interconnexion (100) selon l'une quelconque des revendications 1 à 4, **caractérisé en ce que** le module d'aiguillage (7) est apte à rediriger, en cascade, la communication en cours, vers une pluralité de deuxièmes automates de communication (20a-20m).

6. Dispositif d'interconnexion (100) selon l'une quelconque des revendications 1 à 5, **caractérisé en ce que** le module d'aiguillage (7) est apte à rediriger, en réponse à un message émis par le deuxième automate (20 ; 20a - 20m) de communication avec lequel le terminal (1 ; 1a - 1p) est en cours de communication, ladite communication vers le premier automate (10 ; 10a - 10n) de communication, tout en restant dans ladite session de messagerie instantanée.

7. Dispositif d'interconnexion (100) selon l'une quelconque des revendications 1 à 6, **caractérisé en ce qu'**il comporte des moyens de sauvegarde (9) des échanges d'informations effectués entre l'utilisateur et le premier (10 ;
10a - 10n) automate ou entre l'utilisateur et le deuxième (20 ; 20a - 20m) automate.

8. Procédé d'aiguillage d'une communication en cours entre, d'une part, un terminal (1 ; 1a - 1p) d'un utilisateur (U ; Ua - Up) comprenant un client (3 ; 3a - 3p) de messagerie instantanée et, d'autre part, un premier automate de communication (10 ; 10a - 10n) constituant un premier contact virtuel de cet utilisateur (U ; Ua - Up), ledit procédé comportant:
- une étape de transmission par un module d'aiguillage (7) d'un dispositif d'interconnexion (100) placé en coupure de flux entre un serveur de messagerie instantanée et le premier automate de communication, au cours d'une session de messagerie instantanée établie entre ledit utilisateur et le premier contact virtuel, au premier contact virtuel des messages reçus en provenance dudit utilisateur,
- une étape de redirection par ledit module d'aiguillage, au cours de ladite session, de ladite communication vers un deuxième automate de communication (20 ; 20a - 20m), constituant un deuxième contact virtuel, les messages reçus en provenance dudit utilisateur étant transmis vers le deuxième automate de communication au lieu d'être transmis au premier automate de communication, ladite étape de redirection étant destinée à être exécutée suite à une réception par le module d'aiguillage d'un message avec un paramètre de redirection émis par le premier automate de communication,
- une étape d'envoi par ledit module d'aiguillage d'une requête auprès du client (3 ; 3a - 3p) de messagerie instantanée pour obtenir des informations d'authentification de l'utilisateur au niveau du client de messagerie instantanée de l'utilisateur et une étape de transmission desdites informations au deuxième automate de communication.

9. Procédé d'aiguillage selon la revendication 8, **caractérisé en ce que** la communication en cours est redirigée automatiquement du premier automate de communication (10 ; 10a - 10n) vers ledit deuxième automate de communication (20 ; 20a - 20m) sans que ce dernier (20 ; 20a - 20m) ne soit identifié par l'utilisateur (U ; Ua - Up) du terminal (1 ; 1a - 1p) en tant que nouveau contact, tout en restant dans la même session de messagerie instantanée.

10. Procédé d'aiguillage selon la revendication 9, **caractérisé en ce que**, après ladite redirection, la communication en cours se poursuit entre l'utilisateur et le deuxième automate de communication au moyen d'une fenêtre de discussion de messagerie instantanée préalablement utilisée par ledit utilisateur pour communiquer avec le premier automate (10 ; 10a - 10n) de communication.

11. Procédé d'aiguillage selon la revendication 9 ou 10, **caractérisé en ce qu'**il comprend une étape de redirection, en réponse à un message émis par le deuxième automate (20 ; 20a - 20m) de communication avec lequel le terminal (1 ; 1a - 1p) est en cours de communication, de ladite communication vers le premier automate (10 ; 10a - 10n) de communication, tout en restant dans ladite session de messagerie instantanée.

12. Serveur de messagerie instantanée **caractérisé en ce qu'**il comprend un dispositif d'interconnexion (100) selon l'une quelconque des revendications 1 à 7.

13. Produit programme d'ordinateur téléchargeable depuis un réseau de communication et/ou stocké sur un support d'informations lisible par ordinateur et/ou exécutable par un microprocesseur, **caractérisé en ce qu'**il comprend des instructions de codes de programme pour l'exécution des étapes du procédé d'aiguillage selon au moins l'une des revendications 8 à 11.

## Claims

1. Interconnection device (100) placed as a flow interrupter between an instantaneous-messaging server (5; 5a - 5d) and a first communication logic controller (10; 10a - 10n) forming a first virtual contact of a user (U; Ua - Up) of a terminal (1; 1a - 1p) comprising an instantaneous-messaging client (3; 3a - 3p), said interconnection device (100) placing the user (U; Ua - Up) and said first virtual contact in communication by means of the instantaneous-messaging server (5; 5a - 5d),
said interconnection device (100) comprising a switching module (7) in order, during an instantaneous-messaging session established between said user and the first virtual contact, to transmit to the first virtual contact the messages received from said user,
said switching module being arranged in order, during said session, to forward the current communication to a second communication logic controller (20; 20a - 20m) forming a second virtual contact, said messages received from said user being transmitted to the second communication logic controller instead of being transmitted to the first communication logic controller,
said switching module being arranged to forward said communication following a receipt by the switching module of a message with a forwarding parameter transmitted by the first communication logic controller,
said switching module also being arranged to transmit a request to the instantaneous-messaging client (3; 3a - 3p) so as to retrieve authentication information of the user stored locally at the instantaneous-messaging client of the user and to transmit said information to the second communication logic controller.

2. Device according to Claim 1, in which the second communication logic controller is a communication logic controller associated with the first logic controller, the switching module being configured to contain a definition of associations between the second logic controllers and first logic controllers.

3. Interconnection device (100) according to Claim 1 or 2, **characterized in that** said switching module (7) is capable of automatically forwarding the current communication from the first communication logic controller (10; 10a - 10n) to the second communication logic controller (20; 20a - 20m) without the latter (20; 20a - 20m) being identified by the user (U; Ua - Up) of the terminal (1; 1a - 1p) as a new contact and while remaining in the same instantaneous-messaging session.

4. Interconnection device (100) according to Claim 3, **characterized in that**, after forwarding, the current communication continues between the user and the second communication logic controller by means of an instantaneous-messaging discussion window previously used by said user in order to communicate with the first communication logic controller (10; 10a - 10n).

5. Interconnection device (100) according to any one of Claims 1 to 4, **characterized in that** the switching module (7) is capable of forwarding, as a cascade, the current communication to a plurality of second communication logic controllers (20a-20m).

6. Interconnection device (100) according to any one of Claims 1 to 5, **characterized in that** the switching module (7) is capable of forwarding said communication, in response to a message transmitted by the second communication logic controller (20; 20a - 20m) with which the terminal (1; 1a - 1p) is communicating, to the first communication logic controller (10; 10a - 10n), while remaining in said instantaneous-messaging session.

7. Interconnection device (100) according to any one of Claims 1 to 6, **characterized in that** it comprises means (9) for saving the information interchanges made between the user and the first logic controller (10; 10a - 10n) or between the user and the second logic controller (20; 20a - 20m).

8. Method for switching a current communication between, on the one hand, a terminal (1 ; 1a - 1p) of a user (U; Ua - Up) comprising an instantaneous-messaging client (3; 3a - 3p) and, on the other hand, a first communication logic controller (10; 10a - 10n) forming a first virtual contact of this user (U; Ua - Up), said method comprising:
- a step of transmission by a switching module (7) of an interconnection device (100) placed as a flow interrupter between an instantaneous-messaging server and the first communication logic controller, during an instantaneous-messaging session established between said user and the first virtual contact, to the first virtual contact of the messages received from said user,
- a step of forwarding by said switching module, during said session, said communication to a second communication logic controller (20; 20a - 20m), forming a second virtual contact, the messages received from said user being transmitted to the second communication logic controller instead of being transmitted to the first communication logic controller, said forwarding step being designed to be carried out following a receipt by the switching module of a message with a forwarding parameter transmitted by the first communication logic controller,
- a step of sending by said switching module of a request to the instantaneous-messaging client (3; 3a - 3p) to obtain authentication information of the user at the instantaneous-messaging client of the user and a step of transmitting said information to the second communication logic controller.

9. Switching method according to Claim 8, **characterized in that** the current communication is automatically forwarded from the first communication logic controller (10; 10a - 10n) to said second communication logic controller (20; 20a - 20m) without the latter (20; 20a - 20m) being identified by the user (U; Ua - Up) of the terminal (1; 1a - 1p) as a new contact, while remaining in the same instantaneous-messaging session.

10. Switching method according to Claim 9, **characterized in that**, after said forwarding, the current communication continues between the user and the second communication logic controller by means of an instantaneous-messaging discussion window previously used by said user to communicate with the first communication logic controller (10; 10a - 10n).

11. Switching method according to Claim 9 or 10, **characterized in that** it comprises a step of forwarding said communication, in response to a message transmitted by the second communication logic controller (20; 20a - 20m) with which the terminal (1; 1a - 1p) is communicating, to the first communication logic controller (10; 10a - 10n), while remaining in said instantaneous-messaging session.

12. Instantaneous-messaging server, **characterized in that** it comprises an interconnection device (100) according to any one of Claims 1 to 7.

13. Computer program product that can be downloaded from a communication network and/or stored on a computer-readable and/or microprocessor-executable information medium, **characterized in that** it comprises program code instructions for the execution of the steps of the switching method according to at least one of Claims 8 to 11.

## Patentansprüche

1. Verbindungsvorrichtung (100), die an der Flussunterbrechung zwischen einem Instant-Messaging-Server (5; 5a-5d) und einem ersten Kommunikationsautomaten (10; 10a-10n) angeordnet ist, der einen ersten virtuellen Kontakt eines Benutzers (U; Ua-Up) eines Terminals (1; 1a-1p) darstellt, umfassend einen Instant-Messaging-Kunden (3; 3a-3p), wobei die Verbindungsvorrichtung (100) die Herstellung einer Kommunikation zwischen dem Benutzer (U; Ua-Up) und dem ersten virtuellen Kontakt über den Instant-Messaging-Server (5; 5a-5p) gewährleistet,
wobei die Verbindungsvorrichtung (100) ein Verzweigungsmodul (7) umfasst, um während einer Instant-Messaging-Sitzung, die zwischen dem Benutzer und dem ersten virtuellen Kontakt hergestellt wurde, an den ersten virtuellen Kontakt die Meldungen zu übermitteln, die vom Benutzer erhalten wurden,
wobei das Verzweigungsmodul derart vorgesehen ist, dass es während der Sitzung die laufende Kommunikation zu einem zweiten Kommunikationsautomaten (20; 20a-20m) umleitet, der einen zweiten virtuellen Kontakt darstellt, wobei die vom Benutzer erhaltenen Meldungen zu dem zweiten Kommunikationsautomaten übertragen werden, anstatt dass sie an den ersten Kommunikationsautomaten übertragen werden,
wobei das Verzweigungsmodul derart angeordnet ist, dass es die Kommunikation nach Empfang einer Meldung mit einem Umleitungsparameter durch das Verzweigungsmodul, die vom ersten Kommunikationsautomaten entsandt wurde, umleitet,
wobei das Verzweigungsmodul ferner derart angeordnet ist, dass es eine Anfrage beim Instant-Messaging-Kunden (3; 3a-3p) entsendet, um Authentifizierungsinformationen des Benutzers, der lokal im Bereich des Instant-Messaging-Kunden des Benutzers gespeichert ist, zu erhalten und die Informationen an den zweiten Kommunikationsautomaten zu übertragen.

2. Vorrichtung nach Anspruch 1, bei der der zweite Kommunikationsautomat ein mit dem ersten Automaten verbundener Kommunikationsautomat ist, wobei das Verzweigungsmodul derart konfiguriert ist, dass es eine Definition von Assoziationen zwischen dem zweiten und dem ersten Automaten enthält.

3. Verbindungsvorrichtung (100) nach Anspruch 1 oder 2, **dadurch gekennzeichnet, dass** das Verzweigungsmodul (7) geeignet ist, automatisch die laufende Kommunikation vom ersten Kommunikationsautomaten (10; 10a-10n) zum zweiten Kommunikationsautomaten (20; 20a-20m) umzuleiten, ohne dass dieser Letztgenannte (20; 20a-20m) vom Benutzer (U; Ua-Up) des Terminals (1; 1a-1p) als neuer Kontakt identifiziert wird, und wobei in derselben Instant-Messaging-Sitzung verblieben wird.

4. Verbindungsvorrichtung (100) nach Anspruch 3, **dadurch gekennzeichnet, dass** nach der Umleitung die laufende Kommunikation zwischen dem Benutzer und dem zweiten Kommunikationsautomaten mit Hilfe eines Instant-Messaging-Diskussionsfensters weitergeführt wird, das vorher vom Benutzer verwendet wurde, um mit dem ersten Kommunikationsautomaten (10; 10a-10n) zu kommunizieren.

5. Verbindungsvorrichtung (100) nach einem der Ansprüche 1 bis 4, **dadurch gekennzeichnet, dass** das Verzweigungsmodul (7) geeignet ist, in Kaskade die laufende Kommunikation zu einer Vielzahl von zweiten Kommunikationsautomaten (20a-20m) umzuleiten.

6. Verbindungsvorrichtung (100) nach einem der Ansprüche 1 bis 5, **dadurch gekennzeichnet, dass** das Verzweigungsmodul (7) geeignet ist, als Antwort auf eine Meldung, die von dem zweiten Kommunikationsautomaten (20; 20a-20m) entsandt wurde, mit dem das Terminal (1; 1a-1p) gerade kommuniziert, die Kommunikation zu dem ersten Kommunikationsautomaten (10; 10a-10n) umzuleiten, wobei in der Instant-Messaging-Sitzung verblieben wird.

7. Verbindungsvorrichtung (100) nach einem der Ansprüche 1 bis 6, **dadurch gekennzeichnet, dass** sie Sicherungsmittel (9) für den Informationsaustausch, der zwischen dem Benutzer und dem ersten Automaten (10; 10a-10n) oder zwischen dem Benutzer und dem zweiten Automaten (20; 20a-20m) stattfindet, umfasst.

8. Verfahren zur Verzweigung einer laufenden Kommunikation zwischen einerseits einem Terminal (1; 1a-1p) eines Benutzers (U; Ua-Up), umfassend einen Instant-Messaging-Kunden (3; 3a-3p), und andererseits einem ersten Kommunikationsautomaten (10; 10a-10n), der einen ersten virtuellen Kontakt dieses Benutzers (U; Ua-Up) darstellt, wobei das Verfahren Folgendes umfasst:
- einen Schritt der Übertragung von empfangenen vom Benutzer kommenden Meldungen an den ersten virtuellen Kontakt durch ein Verzweigungsmodul (7) einer Verbindungsvorrichtung (100), die an der Flussunterbrechung zwischen einem Instant-Messaging-Server und dem ersten Kommunikationsautomaten angeordnet ist, während einer Instant-Messaging-Sitzung, die zwischen dem Benutzer und dem ersten virtuellen Kontakt hergestellt wird,
- einen Schritt der Umleitung der Kommunikation durch das Verzweigungsmodul während der Sitzung zu einem zweiten Kommunikationsautomaten (20; 20a-20m), der einen zweiten virtuellen Kontakt darstellt, wobei die empfangenen vom Benutzer kommenden Meldungen zum zweiten Kommunikationsautomaten übertragen werden, anstatt zum ersten Kommunikationsautomaten übertragen zu werden, wobei der Umleitungsschritt dazu bestimmt ist, nach Empfang einer Meldung mit einem Umleitungsparameter, entsandt vom ersten Kommunikationsautomaten, ausgeführt zu werden,
- einen Schritt des Entsendens einer Anfrage beim Instant-Messaging-Kunden (3; 3a-3p) durch das Verzweigungsmodul, um Authentifizierungsinformationen des Benutzers im Bereich des Instant-Messaging-Kunden zu erhalten, und einen Schritt der Übertragung der Informationen an den zweiten Kommunikationsautomaten.

9. Verzweigungsverfahren nach Anspruch 8, **dadurch gekennzeichnet, dass** die laufende Kommunikation automatisch vom ersten Kommunikationsautomaten (10; 10a-10n) zum zweiten Kommunikationsautomaten (20; 20a-20m) umgeleitet wird, ohne dass dieser Letztgenannte (20; 20a-20m) durch den Benutzer (U; Ua-Up) des Terminals (1; 1a-1p) als neuer Kontakt identifiziert wird, wobei in derselben Instant-Messaging-Sitzung verblieben wird.

10. Verzweigungsverfahren nach Anspruch 9, **dadurch gekennzeichnet, dass** nach der Umleitung die laufende Kommunikation zwischen dem Benutzer und dem zweiten Kommunikationsautomaten mit Hilfe eines Instant-Messaging-Diskussionsfensters weitergeführt wird, das vorher vom Benutzer verwendet wurde, um mit dem ersten Kommunikationsautomaten (10; 10a-10n) zu kommunizieren.

11. Verzweigungsverfahren nach einem der Ansprüche 9 oder 10, **dadurch gekennzeichnet, dass** es einen Schritt der Umleitung der Kommunikation zum ersten Kommunikationsautomaten (10; 10a-10n) als Antwort auf eine Meldung umfasst, die von dem zweiten Kommunikationsautomaten (20; 20a-20m) entsandt wurde, mit dem das Terminal (1; 1a-1p) gerade kommuniziert, wobei in der Instant-Messaging-Sitzung verblieben wird.

12. Instant-Messaging-Server, **dadurch gekennzeichnet, dass** er eine Verbindungsvorrichtung (100) nach einem der Ansprüche 1 bis 7 umfasst.

13. Computerprogrammprodukt, das von einem Kommunikationsnetz ferngeladen werden kann und/oder auf einem von einem Computer lesbaren Informationsträger gespeichert ist und/oder von einem Mikroprozessor ausführbar ist, **dadurch gekennzeichnet, dass** es Programmcodebefehle für die Ausführung der Schritte des Verzweigungsverfahrens nach mindestens einem der Ansprüche 8 bis 11 umfasst.
